# EUROPÄISCHE PATENTANMELDUNG

(11) **EP 4 787 505 A1**
(43) Veröffentlichungstag der Anmeldung: **05.08.2026**
(21) Anmeldenummer: 26154983.6
(22) Anmeldetag: 29.01.2026
(51) Int. Cl.: H01M 8/04082, B60L 50/70, H01M 8/04089, B60L 50/75

(54) **BRENNSTOFFZELLENMODUL UND INTRALOGISTIKFAHRZEUG**

(30) Priorität: 29.01.2025 DE 102025000328
(71) Anmelder: GLOBE Fuel Cell Systems GmbH, 70567 Stuttgart (DE)
(72) Erfinder: ESCHENBACH, Max, 81245 München (DE); SZALAI, Marton, 70771 Leinfelden-Echterdingen (DE)
(74) Vertreter: BRP Renaud & Partner mbB Rechtsanwälte Patentanwälte Steuerberater

(57) **Zusammenfassung**

Die Erfindung betrifft ein Brennstoffzellenmodul (3) zum Versorgen eines elektrisch angetriebenen Intralogistikfahrzeugs (1) mit elektrischer Energie, mit einem Brennstoffzellensystem (6) zum Erzeugen elektrischer Energie mittels Wasserstoffgas, mit einem Modultank (7) zum Lagern von Wasserstoffgas unter einem Hochdruck, mit einer Modulventileinrichtung (8), die einen mit dem Modultank (7) gasführend gekoppelten Hochdruckanschluss (9), einen mit dem Hochdruckanschluss (9) gasführend gekoppelten Betankungsanschluss (10) und einen mit dem Brennstoffzellensystem (6) gasführend gekoppelten Mitteldruckanschluss (11) aufweist und die zum Bereitstellen des Wasserstoffgases am Mitteldruckanschluss (11) unter einem Mitteldruck konfiguriert ist. Außerdem ist eine Modulbetankungseinrichtung (12) zum Befüllen des Modultanks (7) mit dem Wasserstoffgas vorgesehen, die einen am Modulgehäuse (5) angeordneten Einfüllstutzen (13) aufweist und mit dem Betankungsanschluss (10) der Modulventileinrichtung (8) gasführend gekoppelt ist.

Ein erhöhter Gebrauchswert ergibt sich mit einem Zusatzanschluss (14), an den eine externe Wasserstoffgasquelle (15) zum Versorgen des Brennstoffzellenmoduls (3) mit Wasserstoffgas anschließbar ist.

## Beschreibung

Die vorliegende Erfindung betrifft ein Brennstoffzellenmodul insbesondere zum Einbau in einen Batterieaufnahmeraum eines elektrisch angetriebenen Intralogistikfahrzeugs zum Versorgen des Intralogistikfahrzeugs mit elektrischer Energie. Die Erfindung betrifft außerdem ein mit einem derartigen Brennstoffzellenmodul ausgestattetes Intralogistikfahrzeug.

Die Intralogistik betrifft logistische Prozesse, die innerhalb eines Unternehmens ablaufen und unterscheidet sich von der Extralogistik, die logistische Prozesse betrifft, die außerhalb eines Unternehmens ablaufen. Die Intralogistik umfasst dabei jede Form der Logistik, die innerhalb des Unternehmens erforderlich ist, nämlich insbesondere Wareneingang, Warenausgang, Warenfluss innerhalb des Unternehmens, Kommissionierung von Waren, Lagerverwaltung, Lagersysteme und interne Beförderungssysteme. Mit anderen Worten, die Intralogistik betrifft die Organisation, Optimierung und Durchführung aller Transport- und Lagerungsprozesse innerhalb des Unternehmens. Sofern Fahrzeuge für derartige intralogistische Zwecke zum Einsatz kommen, handelt es sich um Intralogistikfahrzeuge. Beispiele für Intralogistikfahrzeuge sind Gabelstapler und Zugmaschinen für Flurfolgefahrzeuge, insbesondere zum Warentransport. Intralogistikfahrzeuge können bemannt oder unbemannt konfiguriert sein, so dass sie mit Fahrer (männlich/weiblich/divers) oder ohne Fahrer betrieben werden. Im Unterschied dazu beschäftigt sich die Extralogistik mit dem Warenfluss außerhalb des jeweiligen Unternehmens. Ein typisches Beispiel für ein Extralogistikfahrzeug, das zum Transport von Waren außerhalb des Unternehmens dient, ist beispielsweise ein Lastkraftwagen. Demnach sind Extralogistikfahrzeuge in der Regel deutlich größer und leistungsstärker als Intralogistikfahrzeuge.

Moderne Intralogistikfahrzeuge können anstelle eines Verbrennungsmotors einen elektromotorischen Fahrzeugantrieb aufweisen und zur Versorgung des Fahrzeugantriebs mit elektrischer Energie mit eines Traktionsbatterieblocks ausgestattet sein. Für große Reichweiten und lange Einsatzzeiten können dabei sehr große Traktionsbatterieblöcke zum Einsatz kommen. Ebenso ist es grundsätzlich möglich, ein Intralogistikfahrzeug mit einem Brennstoffzellensystem zum Erzeugen elektrischer Energie mit mithilfe von Wasserstoffgas auszustatten. Batterieelektrische Fahrzeuge weisen hierbei zumeist einen genormten Batterieaufnahmeraum zum Einbau des Traktionsbatterieblocks im Fahrzeuginneren auf. Der Traktionsbatterieblock wird neben dem Energieinhalt auch auf Grund des hohen Eigengewichts als Gegengewicht zur Nutzlast genutzt. Dieser Batterieaufnahmeraum kann auch zum Einbau eines Brennstoffzellen-Energiesystems genutzt werden, das auch als Brennstoffzellenmodul bezeichnet werden kann und das anstelle des für den Batterieaufnahmeraum vorgesehenen Traktionsbatterieblocks eingebaut wird. Dabei ist der für das Brennstoffzellen-Energiesystem zur Verfügung stehende Bauraum durch den Batterieaufnahmeraum eingeschränkt. Zweckmäßig weist das Intralogistikfahrzeug dann außerdem einen Wasserstofftank zum Lagern von Wasserstoffgas auf. Dieser ist im Falle eines Batterie-Ersatzsystems ebenfalls im Batterieaufnahmeraum unterzubringen, während er im Fall eines speziellen Brennstoffzellenfahrzeugs freier im Fahrzeug positioniert werden kann. Die Reichweite und Einsatzdauer derartiger Logistikfahrzeuge steht und fällt mit der Größe des Wasserstofftanks. Im Hinblick auf die Fahrzeugsicherheit und Betriebssicherheit sind jedoch große Wasserstofftanks unerwünscht. Besonders problematisch ist dabei, dass das Wasserstoffgas in einem Wasserstofftank regelmäßig unter einem Hochdruck von mindestens 200 bar gelagert wird, um ein günstiges Verhältnis von Tankgröße zu gespeicherter Wasserstoffmenge erzielen zu können. Gleichzeitig wird ein kostengünstiger Aufbau angestrebt.

Die vorliegende Erfindung beschäftigt sich mit dem Problem, für Intralogistikfahrzeuge einen preiswerten Weg aufzuzeigen, der eine größere Reichweite und/oder längere Einsatzzeit für das Intralogistikfahrzeug ermöglicht.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, für ein derartiges Intralogistikfahrzeug ein Brennstoffzellenmodul bereitzustellen, das so dimensioniert ist, dass es anstelle eines Traktionsbatterieblocks in einen Batterieaufnahmeraum eines Intralogistikfahrzeugs eingesetzt werden kann und das einen eigenen Modultank zum Lagern von Wasserstoffgas unter einem Hochdruck und eine Modulventileinrichtung aufweist, die zum Bereitstellen des Wasserstoffgases unter einem Mitteldruck an einem Mitteldruckanschluss konfiguriert ist. Darüber hinaus ist das erfindungsgemäße Brennstoffzellenmodul außerdem mit einem Zusatzanschluss ausgestattet, der zum Anschließen einer externen Wasserstoffgasquelle konfiguriert ist. Dadurch besitzt das Brennstoffzellenmodul eine Zusatzfunktion, die den Gebrauchswert des Brennstoffzellensystems signifikant erhöht. Durch die vorgeschlagene Bauweise des Brennstoffzellenmoduls ist es nämlich möglich, das Brennstoffzellensystem mit Wasserstoff zu betreiben, der wahlweise mithilfe der Modulventileinrichtung aus dem Modultank und/oder mithilfe des Zusatzanschlusses aus einer grundsätzlich beliebigen externen Wasserstoffquelle stammt bzw. zugeführt wird. Diese externe Wasserstoffquelle ist vorzugsweise fahrzeugseitig vorgesehen, also im oder am Fahrzeug untergebracht bzw. angeordnet und ist hinsichtlich ihrer Unterbringung im oder am Fahrzeug nicht auf den weiter oben genannten Batterieaufnahmeraum beschränkt. Mit anderen Worten, das Brennstoffzellensystem besitzt mit dem Zusatzanschluss eine Schnittstelle, mit deren Hilfe eine externe Wasserstoffgasquelle genutzt werden kann, um das Brennstoffzellensystem des Brennstoffzellenmoduls zusätzlich oder alternativ zum Modultank mit Wasserstoff zu versorgen. Damit ist das Brennstoffzellenmodul hinsichtlich der Wasserstoffversorgung der Brennstoffzelle nicht ausschließlich auf den im Modultank gelagerten Wasserstoff angewiesen. Insbesondere ergibt sich dadurch die Option, zumindest einen externen Zusatztank an das Brennstoffzellenmodul anzuschließen, um das Brennstoffzellensystem auch dann weiter betreiben zu können, wenn der Modultank entleert ist. Dies ist von besonderem Vorteil, wenn das Brennstoffzellensystem tatsächlich in dem Intralogistikfahrzeug verwendet wird und hierzu in dessen Batterieaufnahmeraum anstelle des dafür vorgesehenen Traktionsbatterieblocks untergebracht ist.

Im vorliegenden Zusammenhang ist eine "Konfiguration" gleichbedeutend mit einer "Ausgestaltung" und/oder "Einrichtung" und/oder "Programmierung", sodass die Formulierung "so konfiguriert, dass" gleichbedeutend ist mit der Formulierung "so ausgestaltet, dass" und/oder "so eingerichtet, dass" und/oder "so programmiert, dass".

Der Zusatzanschluss kann mittels eines steuerbaren Schnellsperrventils abgesichert sein, das insbesondere als Nottrennkupplung konfiguriert sein kann. Das Schnellsperrventil kann dabei separat zum Zusatzanschluss angeordnet sein. Alternativ dazu kann das Schnellsperrventil auch in den Zusatzanschluss integriert sein. Insbesondere kann der Zusatzanschluss selbst als Nottrennkupplung konfiguriert sein.

Ein derartiges Brennstoffzellenmodul lässt sich besonders einfach anstelle eines großen Traktionsbatterieblocks in den zur Aufnahme des Traktionsbatterieblocks vorgesehenen Batterieaufnahmeraum des Intralogistikfahrzeugs einbauen. Da das Brennstoffzellenmodul alle wesentlichen Komponenten, die zum Betreiben des Brennstoffzellenmoduls erforderlich sind beinhaltet, sind am Intralogistikfahrzeug keine aufwändigen Anpassungen erforderlich, um von einem reinen Batteriebetrieb auf einen Brennstoffzellenbetrieb mit oder ohne zusätzlicher kleinerer Traktionsbatterie umzustellen. Diese kleine Traktionsbatterie ist deutlich kleiner als der für den Batterieaufnahmeraum vorgesehenen Traktionsbatterieblock. Sie kann insbesondere quasi als Zwischenspeicher und/oder zum Abdecken von Leistungsspitzen für das Brennstoffzellenmodul dienen, so dass ein Brennstoffzellensystem des Brennstoffzellenmoduls bevorzugt mit konstanter elektrischer Leistung betrieben werden kann. Diese Traktionsbatterie kann zusätzlich zum Brennstoffzellenmodul im oder am Intralogistikfahrzeug angebracht sein oder ebenfalls im Brennstoffzellenmodul untergebracht sein und insoweit einen Bestandteil des Brennstoffzellenmoduls bilden. Der Hochdruck, mit dem das Wasserstoffgas im Modultank gelagert wird, liegt üblicherweise in einem Druckbereich von 250 bar bis zu 700 bar, beträgt als mindestens 200 bar und vorzugsweise etwa 350 bar. Der Mitteldruck, mit dem die Modulventileinrichtung das Wasserstoffgas bereitstellt, liegt üblicherweise in einem Druckbereich von 10 bar bis 20 bar, beträgt also mindestens 10bar und vorzugsweise etwa 12 bar.

Im Einzelnen schlägt die Erfindung ein Brennstoffzellenmodul zum Einbau in einen Batterieaufnahmeraum eines elektrisch angetriebenen Intralogistikfahrzeugs zum Versorgen des Intralogistikfahrzeugs mit elektrischer Energie vor, das ein Modulgehäuse, ein im Modulgehäuse angeordnetes Brennstoffzellensystem zum Erzeugen elektrischer Energie mittels Wasserstoffgas, einen im Modulgehäuse angeordneten Modultank zum Lagern von Wasserstoffgas unter einem Hochdruck, und eine im Modulgehäuse angeordneten Modulventileinrichtung aufweist. Die Modulventileinrichtung weist einen mit dem Modultank gasführend gekoppelten Hochdruckanschluss, einen mit dem Hochdruckanschluss gasführend gekoppelten Betankungsanschluss und einen mit dem Brennstoffzellensystem gasführend gekoppelten Mitteldruckanschluss auf und ist zum Bereitstellen des Wasserstoffgases am Mitteldruckanschluss unter einem Mitteldruck konfiguriert. Des Weiteren ist das hier vorgestellte Brennstoffzellenmodul mit einer im und/oder am Modulgehäuse angeordneten Modulbetankungseinrichtung zum Befüllen des Modultanks mit dem unter Hochdruck stehenden Wasserstoffgas ausgestattet, die einen am Modulgehäuse angeordneten Einfüllstutzen zu Zuführen von unter Hochdruck stehendem Wasserstoffgas aufweist und mit dem Betankungsanschluss der Modulventileinrichtung gasführend gekoppelt ist. Außerdem ist das Brennstoffzellenmodul mit einem im und/oder am Modulgehäuse angeordneten Zusatzanschluss ausgestattet, an den eine externe Wasserstoffgasquelle zum Versorgen des Brennstoffzellenmoduls mit Wasserstoffgas anschließbar ist. In der Folge kann das Brennstoffzellensystem wahlweise mit Wasserstoffgas aus dem Modultank und/oder mit Wasserstoffgas betrieben werden, das mittels des Zusatzanschlusses dem Brennstoffzellenmodul zugeführt wird.

Die Modulventileinrichtung kann bevorzugt unmittelbar am Modultank angebracht und vom Modultank getragen und/oder daran befestigt sein, was die Integration der Modulventileinrichtung und des Modultanks im Modulgehäuse vereinfacht.

Entsprechend einer vorteilhaften Ausführungsform kann vorgesehen sein, dass der Zusatzanschluss als Zusatzhochdruckanschluss ausgestaltet ist, an den die externe Wasserstoffgasquelle zum Versorgen des Brennstoffzellenmoduls mit unter Hochdruck stehendem Wasserstoffgas anschließbar ist und der mit dem Hochdruckanschluss und mit dem Betankungsanschluss der Modulventileinrichtung gasführend gekoppelt ist. Durch diese Bauweise kann das unter Hochdruck stehende Wasserstoffgas der Modulventileinrichtung wahlweise vom Modultank oder von der externen Wasserstoffquelle zugeführt werden. Optional kann die Modulventileinrichtung zusätzlich so konfiguriert sein, dass mithilfe der Wasserstoffquelle der Modultank betankt werden kann und/oder dass mithilfe der Modulbetankungseinrichtung auch die externe Wasserstoffquelle betankt werden kann, falls die externe Wasserstoffquelle als externer Wasserstofftank konfiguriert ist bzw. einen externen Wasserstofftank aufweist. Der Zusatzhochdruckanschluss ist bevorzugt am Modulgehäuse angeordnet. Vorteilhaft ist hierbei außerdem, dass eine zum Betanken des Sekundärtanks vorgesehene Verbindungsleistung nur beim Tankvorgang unter hohem Druck steht und im Betrieb druckfrei sein kann. Somit können an dieser Stelle betriebsbedingte Gefährdungen an zusätzlichen Verbindungsleitungen durch Hochdruck vermieden werden.

Entsprechend einer alternativen vorteilhaften Ausführungsform kann vorgesehen sein, dass der Zusatzanschluss als Zusatzmitteldruckanschluss ausgestaltet ist, an den die externe Wasserstoffgasquelle zum Versorgen des Brennstoffzellensystems mit unter Mitteldruck stehendem Wasserstoffgas anschließbar ist und der unter Umgehung der Modulventileinrichtung mit dem Brennstoffzellensystem gasführend gekoppelt ist. In der Folge lässt sich bei dieser Bauform das unter Mitteldruck stehende Wasserstoffgas dem Brennstoffzellensystem wahlweise aus dem Modultank mittels der Modulventileinrichtung und/oder aus der externen Wasserstoffgasquelle mittels des Zusatzmitteldruckanschlusses zuführen.

Gemäß einer vorteilhaften Ausführungsform kann das Brennstoffzellenmodul ein Steuerventil aufweisen, das einen ersten Eingang, der mit dem Mitteldruckanschluss der Modulventileinrichtung gasführend gekoppelt ist, einen zweiten Eingang, der den Zusatzmitteldruckanschluss bildet oder mit dem Zusatzmitteldruckanschluss gasführend gekoppelt ist, und einen Ausgang aufweist, der mit dem Brennstoffzellensystem gasführend gekoppelt ist. Mithilfe dieses Steuerventils lässt sich der Ausgang mit dem ersten Eingang und/oder mit dem zweiten Eingang gasführend verbinden, sodass wahlweise Wasserstoffgas vom Mitteldruckanschluss der Modulventileinrichtung oder vom Zusatzmitteldruckanschluss dem Brennstoffzellensystem zugeführt wird. Das Steuerventil kann dabei zweckmäßig außerhalb der Modulventileinrichtung oder außen an der Modulventileinrichtung angeordnet sein.

Gemäß einer vorteilhaften Ausführungsform kann das Steuerventil so konfiguriert sein, dass es eine Parallelstellung ermöglicht, in der die beiden Eingänge parallel mit dem Ausgang gasführend verbunden sind. Damit ist es möglich, unter dem Mitteldruck stehendes Wasserstoffgas gleichzeitig von der internen Wasserstoffgasquelle, nämlich vom Modultank und von einer beliebigen externen Wasserstoffquelle dem Brennstoffzellensystem zuzuführen.

Alternativ oder zusätzlich dazu kann gemäß einer bevorzugten Ausführungsform vorgesehen sein, dass das Steuerventil so konfiguriert ist, dass der Ausgang wahlweise nur mit dem ersten Eingang oder nur mit dem zweiten Eingang gasführend verbunden ist. Bei dieser Bauform des Steuerventils ist es insbesondere möglich, in einer ersten Schaltstellung des Steuerventils zunächst den Modultank zum Betreiben des Brennstoffzellensystems zu verwenden, um dann bedarfsabhängig durch entsprechendes Umschalten des Steuerventils in einer zweiten Schaltstellung des Steuerventils die externe Wasserstoffquelle zum Betreiben des Brennstoffzellensystems zu verwenden, insbesondere für den Fall, dass der Modultank leer ist. In der ersten Schaltstellung des Steuerventils ist es außerdem möglich, die externe Wasserstoffquelle zu tauschen, beispielsweise kann ein leerer externer Wasserstofftank gegen einen vollen externen Wasserstofftank ausgetauscht werden.

Entsprechend einer vorteilhaften Ausführungsform kann vorgesehen sein, dass das Steuerventil als 3-Wege-Ventil konfiguriert ist, das sich durch eine hohe Zuverlässigkeit bei niedrigen Kosten auszeichnet.

Entsprechend einer vorteilhaften Ausführungsform kann vorgesehen sein, dass der Zusatzanschluss als Schnellkupplung konfiguriert ist, die eine einfache und manuell, insbesondere werkzeuglos, durchführbare Kopplung mit der externen Wasserstoffgasquelle ermöglicht, sofern die Wasserstoffgasquelle mit einer zur Schnellkupplung komplementären Gegenkupplung gasführend gekoppelt ist oder eine solche aufweist.

Gemäß einer vorteilhaften Ausführungsform kann das Brennstoffzellenmodul eine Steuereinrichtung zum Betreiben des Brennstoffzellenmoduls aufweisen, die mit dem Brennstoffzellensystem zum Steuern des Brennstoffzellensystems und mit der Modulventileinrichtung zum Steuern der Modulventileinrichtung elektrisch gekoppelt ist. Die Steuereinrichtung ermöglicht einen selbsttätigen Betrieb des Brennstoffzellenmoduls. Die Steuereinrichtung kann optional auch so konfiguriert sein, dass sie einen Betankungsvorgang überwachen kann, beispielsweise um in einem Fehlerfall entsprechende Schutzventile schnell schließen zu können.

Ein erfindungsgemäßes Intralogistikfahrzeug ist mit einem elektromotorischen Fahrzeugantrieb und mit einem Brennstoffzellenmodul der vorstehend beschriebenen Art ausgestattet. Dabei kann insbesondere vorgesehen sein, dass das Brennstoffzellenmodul anstelle eines Traktionsbatterieblocks in einen Batterieaufnahmeraum des Intralogistikfahrzeugs eingesetzt ist, der zum Einsetzen des Traktionsbatterieblocks konfiguriert ist.

Entsprechend einer vorteilhaften Ausführungsform kann das Intralogistikfahrzeugs einen Fahrzeugtank zum Lagern von Wasserstoffgas unter dem Hochdruck aufweisen. Des Weiteren kann das Intralogistikfahrzeug eine Fahrzeugventileinrichtung aufweisen, die einen mit dem Fahrzeugtank gasführend gekoppelten Hochdruckanschluss, einen mit dem Hochdruckanschluss gasführend gekoppelten Betankungsanschluss und einen Mitteldruckanschluss aufweist und die zum Bereitstellen des Wasserstoffgases am Mitteldruckanschluss unter dem Mitteldruck konfiguriert ist. Ferner kann der Mitteldruckanschluss der Fahrzeugventileinrichtung mit dem als Zusatzmitteldruckanschluss ausgestalteten Zusatzanschluss des Brennstoffzellenmoduls gasführend gekoppelt sein. Bei dieser Bauweise kann das Brennstoffzellenmodul nun wahlweise auf den Modultank und auf den Fahrzeugtank zu greifen, um das Brennstoffzellensystem mit Wasserstoff wahlweise aus dem Modultank und/oder aus dem Fahrzeugtank zu versorgen. Der Fahrzeugtank repräsentiert dabei den Wasserstofftank der vorstehend genannten externen Wasserstoffgasquelle. Durch das im Fahrzeugtank gespeicherte Wasserstoffgas lässt sich die Reichweite und/oder die Einsatzdauer des Intralogistikfahrzeugs erheblich vergrößern.

Die Fahrzeugventileinrichtung kann bevorzugt unmittelbar am Fahrzeugtank angebracht und vom Fahrzeugtank getragen und/oder daran befestigt sein, was die Integration der Fahrzeugventileinrichtung und des Fahrzeugtanks am Intralogistikfahrzeug vereinfacht.

Entsprechend einer vorteilhaften Ausführungsform kann vorgesehen sein, dass der Fahrzeugtank außerhalb des Modulgehäuses am Intralogistikfahrzeugs angeordnet ist. Damit ist die Unterbringung des Fahrzeugtanks am Intralogistikfahrzeug unabhängig vom Brennstoffzellenmodul, wodurch sich am Intralogistikfahrzeugs vorhandener Einbauraum und/oder Anbauraum besser nutzen lässt. Insbesondere kann der Fahrzeugtank an einer gut zugänglichen Stelle am Intralogistikfahrzeug angeordnet sein.

Insbesondere kann der Fahrzeugtank mittels Schnellbefestigungsmittel lösbar am Intralogistikfahrzeug angebracht sein, so dass er sich bedarfsabhängig leicht montieren und demontieren lässt. In Verbindung mit der vorstehend genannten Schnellkupplung ist es insbesondere möglich, einen leeren Fahrzeugtank gegen einen vollen Fahrzeugtank einfach und schnell auszutauschen, ohne dass ein Tankvorgang durchgeführt werden muss.

Gemäß einer vorteilhaften Ausführungsform kann vorgesehen sein, dass der Fahrzeugtank und der Modultank baugleich ausgestaltet sind und insbesondere identisch aufgebaut sind. Die baugleiche Ausgestaltung vereinfacht die Integration und reduziert aufgrund der größeren Stückzahl die Herstellungskosten.

Gemäß einer vorteilhaften Ausführungsform können die Fahrzeugventileinrichtung und die Modulventileinrichtung baugleich ausgestaltet sein und insbesondere identisch aufgebaut sein. Die Verwendung von Gleichteilen erhöht die Stückzahl und reduziert die Stückkosten.

Entsprechend einer vorteilhaften Ausführungsform kann vorgesehen sein, die Modulbetankungseinrichtung außerdem mit dem Betankungsanschluss der Fahrzeugventileinrichtung gasführend gekoppelt ist. Hierdurch ist es möglich, über den Einfüllstutzen der Modulbetankungseinrichtung auch den Fahrzeugtank zu betanken, also mit Wasserstoffgas zu befüllen. Dies vereinfacht den Tankvorgang.

Gemäß einer alternativen Ausführungsform kann das Intralogistikfahrzeugs eine Fahrzeugbetankungseinrichtung zum Befüllen des Fahrzeugtanks mit dem Wasserstoffgas aufweisen, die einen am Intralogistikfahrzeug angeordneten zusätzlichen Einfüllstutzen aufweist und mit dem Betankungsanschluss der Fahrzeugventileinrichtung gasführend gekoppelt ist. Dadurch weist das Intralogistikfahrzeug zwei separate Einfüllstutzen auf, nämlich den Einfüllstutzen der Fahrzeugbetankungseinrichtung, der zum Betanken des Fahrzeugtanks dient, und den Einfüllstutzen der Modulbetankungseinrichtung, der zum Betanken des Modultanks dient. Mit anderen Worten, das Intralogistikfahrzeug weist einerseits einen ersten Einfüllstutzen zum Befüllen des Modultanks mit Wasserstoffgas und andererseits einen vom ersten Einfüllstutzen unabhängigen, dazu separaten zweiten Einfüllstutzen zum Befüllen des Fahrzeugtanks mit Wasserstoffgas auf. Die beiden separaten Wasserstofftanks, nämlich der Modultank und der Fahrzeugtank, sind demnach mit separaten Einfüllstutzen ausgestattet und lassen sich dadurch separat und unabhängig voneinander mit Wasserstoffgas betanken. Durch die Bereitstellung von zwei separaten Einfüllstutzen kann auf eine Hochdruckleitung verzichtet werden, die bei einem gemeinsam genutzten Einfüllstutzen die Modulbetankungseinrichtung mit der Fahrzeugventileinrichtung gasführend koppelt.

Gemäß einer vorteilhaften Ausführungsform kann der Einfüllstutzen der Fahrzeugbetankungseinrichtung außerhalb des Modulgehäuses am Intralogistikfahrzeugs angeordnet sein. Damit kann jede geeignete und gut zugängliche Stelle am Intralogistikfahrzeug zur Anbringung des Einfüllstutzens genutzt werden.

Gemäß einer anderen vorteilhaften Ausführungsform kann vorgesehen sein, dass die Fahrzeugbetankungseinrichtung und die Modulbetankungseinrichtung baugleich ausgestaltet sind und insbesondere identisch aufgebaut sein können. Auch diese Maßnahme reduziert die Herstellungskosten für das Intralogistikfahrzeug. Insbesondere können dabei auch die beiden separaten Einfüllstutzen baugleich bzw. identisch sein, wodurch es möglich ist, mit derselben Tankeinrichtung, die komplementär zum Einfüllstutzen konfiguriert ist, so dass sie mit dem Einfüllstutzen zum Zuführen von unter Hochdruck stehendem Wasserstoffgas gekoppelt werden kann, sowohl den Modultank als auch den Fahrzeugtank nacheinander zu befüllen.

Entsprechend einer vorteilhaften Ausführungsform kann vorgesehen sein, dass die Steuereinrichtung des Brennstoffzellenmoduls außerdem mit der Fahrzeugventileinrichtung zum Steuern der Fahrzeugventileinrichtung elektrisch gekoppelt ist. Durch diese Maßnahme wird das Brennstoffzellenmodul steuerungstechnisch mit dem diesbezüglich externen Fahrzeugtank gekoppelt. Dies vereinfacht den Betrieb des Brennstoffzellenmoduls.

Gemäß einer anderen vorteilhaften Ausführungsform kann vorgesehen sein, dass das Intralogistikfahrzeug eine Traktionsbatterie aufweist, die mit dem Brennstoffzellenmodul und mit dem Fahrzeugantrieb elektrisch gekoppelt ist. Die mithilfe des Brennstoffzellensystems erzeugte elektrische Energie kann zum Laden der Traktionsbatterie und/oder zum Versorgen des Fahrzeugantriebs genutzt werden. Wie weiter oben erläutert, kann diese Traktionsbatterie zusätzlich zum Brennstoffzellenmodul als Bestandteil des Intralogistikfahrzeugs oder innerhalb des Brennstoffzellenmoduls als Bestandteil des Brennstoffzellenmoduls realisiert werden.

Gemäß einer zweckmäßigen Ausführungsform kann vorgesehen sein, dass das Intralogistikfahrzeug eine Fahrzeugsteuerung zum Betreiben des Intralogistikfahrzeugs aufweist, die mit dem Fahrzeugantrieb zum Steuern des Fahrzeugantriebs elektrisch gekoppelt ist. Zweckmäßig kann nun die Steuereinrichtung des Brennstoffzellenmoduls mit der Fahrzeugsteuerung und/oder mit der Traktionsbatterie elektrisch gekoppelt sein. Hierdurch kann die Steuereinrichtung einfach auf eine Leistungsanforderung der Fahrzeugsteuerung und/oder der Traktionsbatterie reagieren.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den durch die Ansprüche definierten Rahmen der Erfindung zu verlassen. Vorstehend genannte und nachfolgend noch zu nennende Bestandteile einer übergeordneten Einheit, wie z.B. einer Einrichtung, einer Vorrichtung oder einer Anordnung, die separat bezeichnet sind, können separate Bauteile bzw. Komponenten dieser Einheit bilden oder integrale Bereiche bzw. Abschnitte dieser Einheit sein, auch wenn dies in den Zeichnungen anders dargestellt ist.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Figur 1: eine stark vereinfachte Seitenansicht eines Intralogistikfahrzeugs in Form eines Gabelstaplers,
- Figuren 2 bis 4: stark vereinfachte, schaltplanartige Prinzipdarstellung des Intralogistikfahrzeugs mit einem Brennstoffzellenmodul bei verschiedenen Ausführungsformen.

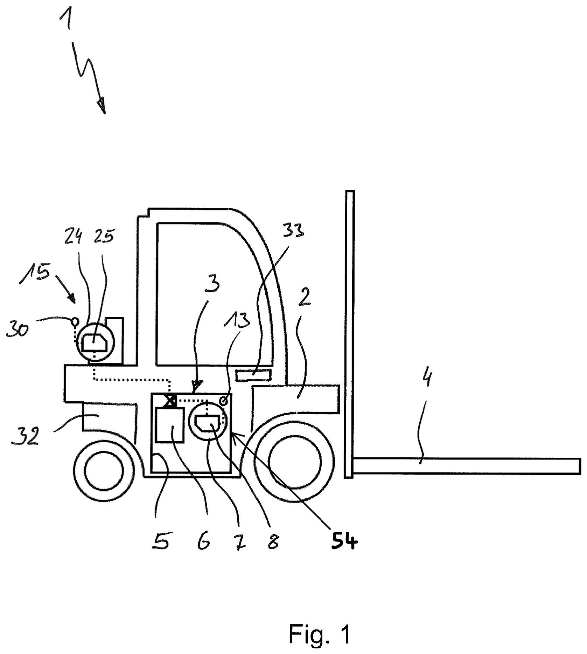

Entsprechend Figur 1 umfasst ein Intralogistikfahrzeug 1, das hier rein exemplarisch und ohne Beschränkung der Allgemeinheit als Gabelstapler konfiguriert ist, einen elektromotorischen Fahrzeugantrieb 2 und ein Brennstoffzellenmodul 3, das zur Bereitstellung elektrische Energie dient, die vom Fahrzeugantrieb 2 zum Antreiben des Intralogistikfahrzeugs 1 genutzt werden kann. Es ist klar, dass das als Gabelstapler ausgestaltete Intralogistikfahrzeugs 1 außerdem mit einem hier nicht näher gezeigten Hubantrieb zum Verstellen einer Hubgabel 4 ausgestattet ist. Das Brennstoffzellenmodul 3 ist dabei in einen Batterieaufnahmeraum 54 des Intralogistikfahrzeugs 1 eingesetzt. Dieser Batterieaufnahmeraum 54 ist an sich zum Aufnehmen eines hier nicht gezeigten Traktionsbatterieblocks konfiguriert. Anstelle dieses Traktionsbatterieblocks nimmt der Batterieaufnahmeraum 54 hier das Brennstoffzellenmodul 3 auf.

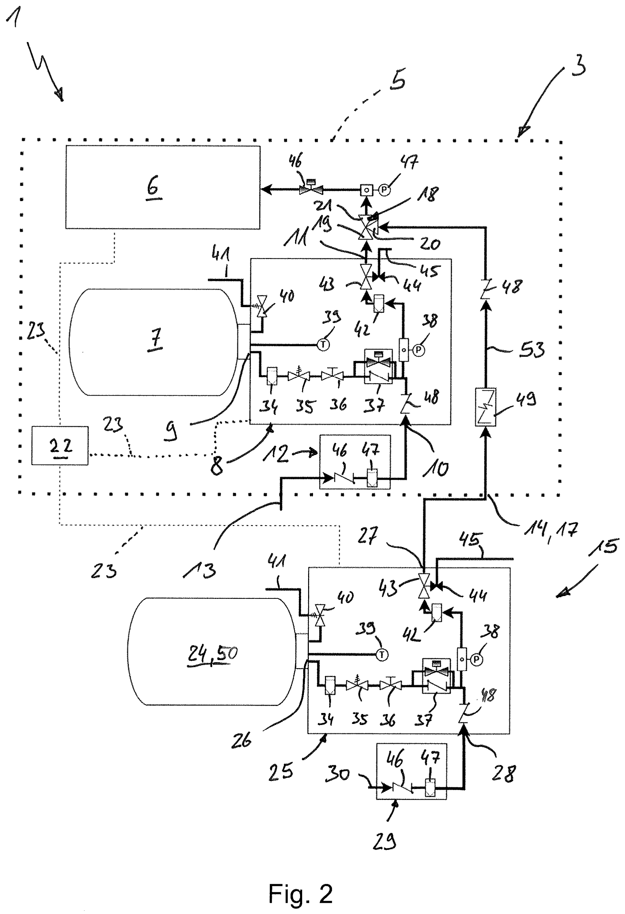

Entsprechend den Figuren 1 bis 4 umfasst das Brennstoffzellenmodul 3 ein Modulgehäuse 5, das in den Figuren 2 bis 4 mit unterbrochener Linie angedeutet ist. Das Brennstoffzellenmodul 3 umfasst außerdem ein Brennstoffzellensystem 6, das im Modulgehäuse 5 angeordnet ist. Das Brennstoffzellensystem 6 ist zum Erzeugen elektrischer Energie mittels Wasserstoffgas konfiguriert und weist dazu in üblicher Weise einen hier nicht näher gezeigten Brennstoffzellenstapel auf sowie Einrichtungen zum Zuführen und Abführen von Anodengas und Kathodengas, Einrichtungen zum Filternd und/oder Befeuchten und/oder Aufladen bzw. unter Druck setzen von Kathodengas und dergleichen. Außerdem ist das Brennstoffzellenmodul 3 mit einem Modultank 7 zum Lagern von Wasserstoffgas unter einem Hochdruck ausgestattet. Dabei ist der Modultank 7 ebenfalls im Modulgehäuse 5 angeordnet. Des Weiteren ist das Brennstoffzellenmodul 3 mit einer Modulventileinrichtung 8 ausgestattet, die ebenfalls im Modulgehäuse 5 und insbesondere unmittelbar am Modultank 7 angeordnet bzw. befestigt ist.

Entsprechend den Figuren 2 bis 4 weist die Modulventileinrichtung 8 einen mit dem Modultank 7 gasführend gekoppelten Hochdruckanschluss 9, einen mit dem Hochdruckanschluss 9 gasführend gekoppelten Betankungsanschluss 10 und einen mit dem Brennstoffzellensystem 6 gasführend gekoppelten Mitteldruckanschluss 11 auf. Außerdem ist die Modulventileinrichtung 8 zum Bereitstellen des Wasserstoffgases am Mitteldruckanschluss 11 unter einem Mitteldruck konfiguriert. Das Brennstoffzellenmodul 3 ist hier außerdem mit einer Modulbetankungseinrichtung 12 ausgestattet, die im bzw. am Modulgehäuse 5 angeordnet ist und zum Befüllen des Modultanks 7 mit dem Wasserstoffgas konfiguriert ist. Hierzu weist die Modulbetankungseinrichtung 12 einen am Motorgehäuse 5 angeordneten Einfüllstutzen 13 auf und ist mit dem Betankungsanschluss 10 der Modulventileinrichtung 8 gasführend gekoppelt. Des Weiteren ist am Modulgehäuse 5 ein Zusatzanschluss 14 ausgebildet, an den eine externe Wasserstoffgasquelle 15 zum Versorgen des Brennstoffzellenmoduls 3 mit Wasserstoffgas anschließbar ist. Die externe Wasserstoffgasquelle 15 kann gemäß den hier gezeigten Beispielen einen externen Wasserstofftank 50 aufweisen. Der Zusatzanschluss 14 kann mittels eines Schnellsperrventils 49 abgesichert sein, das insbesondere als Nottrennkupplung konfiguriert sein kann. Das Schnellsperrventil 49 kann dabei wie in den Figuren 2 bis 4 dargestellt separat zum Zusatzanschluss 14 angeordnet sein. Alternativ dazu kann das Schnellsperrventil 49 auch in den Zusatzanschluss 14 integriert sein. Insbesondere kann der Zusatzanschluss 14 selbst als Nottrennkupplung konfiguriert sein.

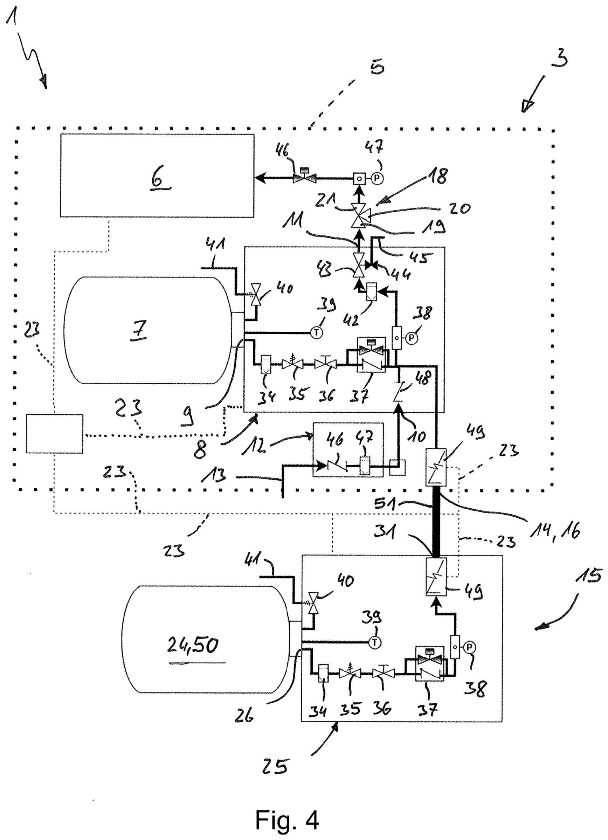

Im Beispiel der Figur 4 ist der Zusatzanschluss 14 als Zusatzhochdruckanschluss 16 konfiguriert, an den die externe Wasserstoffgasquelle 15 zum Versorgen des Brennstoffzellenmoduls 3 mit unter Hochdruck stehendem Wasserstoffgas anschließbar ist. Der Zusatzhochdruckanschluss 16 ist mit dem Hochdruckanschluss 9 und mit dem Betankungsanschluss 10 der Modulventileinrichtung 8 gasführend gekoppelt. Des Weiteren kann im Beispiel der Figur 4 die Modulventileinrichtung 8 so konfiguriert sein, dass sie am Mitteldruckanschluss 11 wahlweise Wasserstoffgas aus dem Modultank 7 und/oder aus der externen Wasserstoffgasquelle 15 unter dem Mitteldruck bereitstellt. Darüber hinaus kann die Modulventileinrichtung 8 so konfiguriert sein, dass es mithilfe der Modulbetankungseinrichtung 12 möglich ist, sowohl dem Modultank 7 als auch der externen Wasserstoffgasquelle 15 unter Hochdruck stehendes Wasserstoffgas zuzuführen. Damit lässt sich über den Einfüllstutzen 13 der Modulbetankungseinrichtung 12 sowohl der interne Modultank 7 als auch der Wasserstofftank 50 der externen Wasserstoffgasquelle 15 befüllen. Die Fahrzeugventileinrichtung 25 ist mittels einer Hochdruckleitung 51 mit dem Zusatzhochdruckanschluss 16 gasführend gekoppelt. Die Anschlüsse der Hochdruckleitung 51 an der Fahrzeugventileinrichtung 25 und am Brennstoffzellenmodul 3 sind dabei mittels Schnellsperrventilen 49 abgesichert. Diese Schnellsperrventile 49 können insbesondere als Nottrennkupplungen konfiguriert sein.

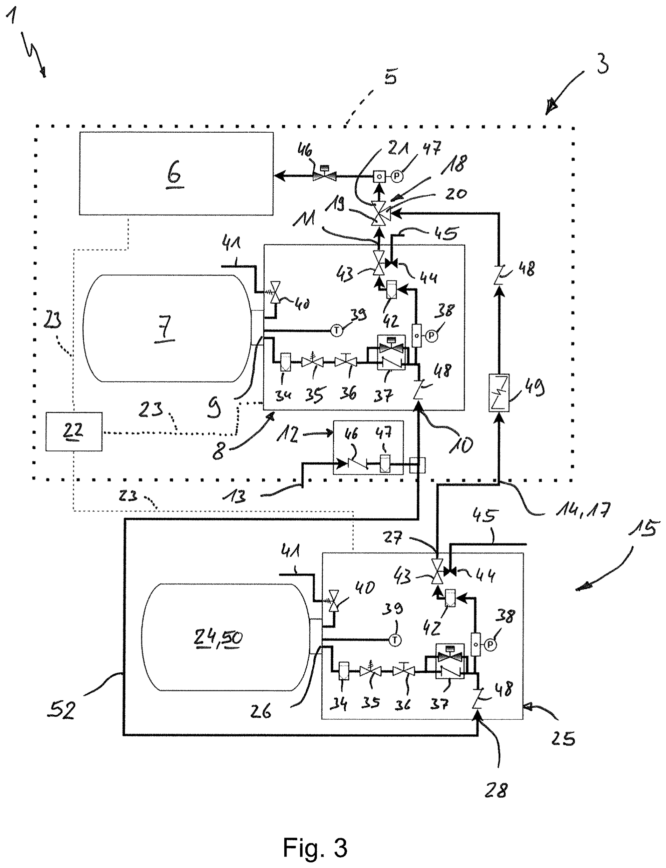

In den Ausführungsbeispielen der Figuren 2 und 3 ist der Zusatzanschluss 14 dagegen als Zusatzmitteldruckanschluss 17 konfiguriert, an den die externe Wasserstoffgasquelle 15 zum Versorgen des Brennstoffzellensystems 6 mit unter Mitteldruck stehendem Wasserstoffgas anschließbar ist. Hierzu ist der Zusatzmitteldruckanschluss 17 gemäß den Figuren 2 und 3 unter Umgehung der Modulventileinrichtung 8 mit dem Brennstoffzellensystem 6 gasführend gekoppelt. Damit lässt sich das Brennstoffzellensystem 6 mit Wasserstoffgas aus dem Modultank 7 und/oder aus der externen Wasserstoffgasquelle 15 mit unter Mitteldruck stehendem Wasserstoffgas versorgen. Das Brennstoffzellenmodul 3 kann hierzu mit einem Steuerventil 18 ausgestattet sein, das einen ersten Eingang 19, einen zweiten Eingang 20 und einen Ausgang 21 aufweist. Der erste Eingang 19 ist mit dem Mitteldruckanschluss 11 der Modulventileinrichtung 8 gasführend gekoppelt. Der zweite Eingang 20 ist mit dem Zusatzmitteldruckanschluss 17 gasführend gekoppelt. Der Ausgang 21 ist mit dem Brennstoffzellensystem 6 gasführend gekoppelt. Das Steuerventil 18 kann insbesondere als 3-Wege-Ventil konfiguriert sein. Ferner kann das Steuerventil 18 so konfiguriert sein, dass es eine Parallelstellung ermöglicht, in der die beiden Eingänge 19, 20 parallel mit dem Ausgang 21 gasführend verbunden sind. Damit lässt sich das Brennstoffzellensystem 6 gleichzeitig aus dem Modultank 7 und aus der externen Wasserstoffgasquelle 15 mit unter Mitteldruck stehendem Wasserstoffgas versorgen. Bevorzugt ist jedoch das Steuerventil 18 so konfiguriert, dass der Ausgang 21 wahlweise in einer ersten Schaltstellung nur mit dem ersten Eingang 19 oder in einer zweiten Schaltstellung nur mit dem zweiten Eingang 20 gasführend verbunden ist. In der ersten Schaltstellung wird das Brennstoffzellensystem 6 dann ausschließlich mit Wasserstoffgas aus dem Modultank 7 versorgt. In der zweiten Schaltstellung wird das Brennstoffzellensystem 6 dagegen ausschließlich mit Wasserstoffgas aus der externen Wasserstoffgasquelle 15 versorgt.

Das Brennstoffzellenmodul 3 ist außerdem mit einer Steuereinrichtung 22 ausgestattet, die zum Betreiben des Brennstoffzellenmoduls 3 konfiguriert ist und die hierzu mit dem Brennstoffzellensystem 6 zum Steuern des Brennstoffzellensystems 6 und mit der Modulventileinrichtung 8 zum Steuern der Modulventileinrichtung 8 mittels entsprechender Steuerleitungen 23 elektrisch gekoppelt ist.

Bei der Verwendung des Brennstoffzellenmoduls 3 im Intralogistikfahrzeug 1 kann gemäß den Figuren 1 bis 4 die externe Wasserstoffgasquelle 15 einen Fahrzeugtank 24 und eine Fahrzeugventileinrichtung 25 aufweisen. Der Fahrzeugtank 24 entspricht dann dem vorstehend genannten externen Wasserstofftank 50. Dementsprechend weist das Intralogistikfahrzeug 1 den Fahrzeugtank 24 zum Lagern von Wasserstoffgas unter dem Hochdruck auf. Ferner weist das Intralogistikfahrzeug 1 die Fahrzeugventileinrichtung 25 auf. Die Fahrzeugventileinrichtung 25 weist in den Ausführungsformen der Figuren 2 bis 4 einen mit dem Fahrzeugtank 24 gasführend gekoppelten Hochdruckanschluss 26 auf. In den Ausführungsform der Figuren 2 und 3 weist die Fahrzeugventileinrichtung 25 außerdem einen Mitteldruckanschluss 27 auf und ist zum Bereitstellen des Wasserstoffgases am Mitteldruckanschluss 27 unter dem Mitteldruck konfiguriert. Bei den in den Figuren 2 und 3 gezeigten Ausführungsformen ist die Fahrzeugventileinrichtung 25 ferner mit einem Betankungsanschluss 28 ausgestattet, der mit dem Hochdruckanschluss 26 gasführend gekoppelt ist. Des Weiteren ist in den Beispielen der Figuren 2 und 3 vorgesehen, dass der Mitteldruckanschluss 27 der Fahrzeugventileinrichtung 25 mit dem Zusatzmitteldruckanschluss 17 des Brennstoffzellenmoduls 3 gasführend gekoppelt ist. Damit ist der Fahrzeugtank 24 mithilfe der Fahrzeugventileinrichtung 25 und mithilfe des Zusatzmitteldruckanschlusses 17 mit dem Brennstoffzellenmodul 3 gekoppelt, derart, dass sich das Brennstoffzellensystem 6 mit Wasserstoffgas aus dem Modultank 7 und/oder mit Wasserstoffgas aus den Fahrzeugtank 24 versorgen und betreiben lässt.

Der Fahrzeugtank 24 ist außerhalb des Modulgehäuses 5 am Intralogistikfahrzeugs 1 angeordnet. Zweckmäßig können der Fahrzeugtank 24 und der Modultank 7 baugleich und insbesondere identisch konfiguriert sein. Ebenso ist bei den Ausführungsformen der Figuren 2 und 3 vorgesehen, dass die Fahrzeugventileinrichtung 25 und die Modulventileinrichtung 8 baugleich und insbesondere identisch konfiguriert sind.

Bei der in Figur 2 gezeigten Ausführungsform ist das Intralogistikfahrzeugs 1 außerdem mit einer Fahrzeugbetankungseinrichtung 29 ausgestattet, die zum Befüllen des Fahrzeugtanks 24 mit dem unter Hochdruck stehenden Wasserstoffgas konfiguriert ist. Die Fahrzeugbetankungseinrichtung 29 weist hierfür einen am Intralogistikfahrzeug 1 angeordneten weiteren Einfüllstutzen 30 auf und ist mit dem Betankungsanschluss 28 der Fahrzeugventileinrichtung 25 gasführend gekoppelt. Der Einfüllstutzen 30 der Fahrzeugbetankungseinrichtung 29 ist bezüglich des Einfüllstutzens 13 der Modulbetankungseinrichtung 12 separat realisiert und außerdem separat am Intralogistikfahrzeug 1 angeordnet. Insbesondere ist der Einfüllstutzen 30 der Fahrzeugbetankungseinrichtung 29 außerhalb des Modulgehäuses 5 am Intralogistikfahrzeug 1 angeordnet. Im Beispiel der Figur 2 sind die Fahrzeugbetankungseinrichtung 29 und die Modulbetankungseinrichtung 12 baugleich und insbesondere identisch konfiguriert.

Im Unterschied zu Figur 2 zeigt Figur 3 eine Ausführungsform, bei welcher auf die Fahrzeugbetankungseinrichtung 29 verzichtet wird. In diesem Fall ist die Modulbetankungseinrichtung 12 zusätzlich mit dem Betankungsanschluss 28 der Fahrzeugventileinrichtung 25 gasführend gekoppelt. Hierbei kommt eine Hochdruckleitung 52 zum Einsatz, die den Betankungsanschluss 28 der Fahrzeugventileinrichtung 25 mit der Modulbetankungseinrichtung 12 gasführend koppelt. Durch diese Maßnahme lässt sich mithilfe des Einfüllstutzens 13 der Modulbetankungseinrichtung 12 sowohl der Modultank 7 als auch der Fahrzeugtank 24 mit unter Hochdruck stehendem Wasserstoffgas befüllen.

Auch die in Figur 4 gezeigte Ausführungsform kommt ohne die Fahrzeugbetankungseinrichtung 29 aus. Bei dieser Ausführungsform ist die Modulventileinrichtung 8 so konfiguriert, dass es über den Zusatzhochdruckanschluss 16 außerdem möglich ist, den Fahrzeugtank 24 zu befüllen. Hierzu wird über den Einfüllstutzen 13 der Modulbetankungseinrichtung 12 unter Hochdruck stehendes Wasserstoffgases zugeführt, dass dann mithilfe der Modulventileinrichtung 8 auf den Modultank 7 und auf den Fahrzeugtank 24 verteilt wird. Insbesondere können hierzu die Schnellsperrventile 49 am Zusatzhochdruckanschluss 16 und an einem weiteren Hochdruckanschluss 31 der Fahrzeugventileinrichtung 25 mit Hilfe der Steuereinrichtung 22 entsprechend überwacht und gesteuert werden. Des Weiteren kann die Steuereinrichtung 22 zusätzlich mit der Fahrzeugventileinrichtung 25 zum Steuern der Fahrzeugventileinrichtung 25 elektrisch gekoppelt sein. Entsprechende Steuerleitungen sind wieder mit 23 bezeichnet.

Bei den in den Figuren 2 und 3 gezeigten Ausführungsformen kann der Zusatzmitteldruckanschluss 17 am Modulgehäuse 5 angeordnet sein, insbesondere derart, dass er von außen zugänglich ist. Zweckmäßig kann der Zusatzmitteldruckanschluss 17 als Schnellkupplung konfiguriert sein, die eine einfache und manuell, insbesondere werkzeuglos, durchführbare Kopplung mit dem Mitteldruckanschluss 27 der Fahrzeugventileinrichtung 25 ermöglicht. Die Fahrzeugventileinrichtung 25 ist dann mit einer zur Schnellkupplung komplementären Gegenkupplung ausgestattet.

Im angeschlossenen Zustand wird eine gasführende Kopplung zwischen dem zweiten Eingang 20 des Steuerventils 18 und dem Mitteldruckanschluss 27 der Fahrzeugventileinrichtung 25 mittels einer Mitteldruckleitung 53 realisiert. Bei am Modulgehäuse 5 angebrachtem Zusatzmitteldruckanschluss 17 verbindet ein interner Abschnitt der Mitteldruckleitung 53 den Zusatzmitteldruckanschluss 17 mit dem zweiten Eingang 20 des Steuerventils 18, während ein externer Abschnitt der Mitteldruckleitung 53 den Zusatzmitteldruckanschluss 17 mit dem Mitteldruckanschluss 27 der Fahrzeugventileinrichtung 25 verbindet. Sofern keine gut zugängliche Schnellkupplung erforderlich ist, kann der Zusatzmitteldruckanschluss 17 an jeder beliebigen Stelle der Mitteldruckleitung 53 angeordnet sein, z.B. unmittelbar am Steuerventil 18. Insbesondere kann der Zusatzmitteldruckanschluss 17 den zweiten Eingang 20 bilden.

Bei der in Figur 4 gezeigten Ausführungsform kann der Zusatzhochdruckanschluss 16 am Modulgehäuse 5 angeordnet sein, insbesondere derart, dass er von außen zugänglich ist. Zweckmäßig kann der Zusatzhochdruckanschluss 16 als Schnellkupplung konfiguriert sein, die eine einfache und manuell, insbesondere werkzeuglos, durchführbare Kopplung mit dem weiteren Hochdruckanschluss 31 der Fahrzeugventileinrichtung 25 ermöglicht, insbesondere mittels der Hochdruckleitung 51. Der Zusatzhochdruckanschluss 16 kann insbesondere als Nottrennkupplung ausgestaltet sein, die zerstörungsfrei und druckausgeglichen arbeitet und die Durchleitung von gasförmigem Wasserstoff ermöglicht. Die Fahrzeugventileinrichtung 25 bzw. die Hochdruckleitung 51 ist dann mit einer zur Schnellkupplung komplementären Gegenkupplung ausgestattet.

Gemäß Figur 1 kann das Intralogistikfahrzeug 1 zweckmäßig mit einer Traktionsbatterie 32 ausgestattet sein, die mit dem Brennstoffzellenmodul 3 bzw. mit dem Brennstoffzellensystem 6 und mit dem Fahrzeugantrieb 2 elektrisch gekoppelt ist. Außerdem kann das Intralogistikfahrzeug 1 eine Fahrzeugsteuerung 33 aufweisen, die zum Betreiben des Intralogistikfahrzeugs 1 konfiguriert ist und hierzu zumindest mit dem Fahrzeugantrieb 2 zum Steuern des Fahrzeugantriebs 2 elektrisch gekoppelt ist. Besonders zweckmäßig kann nun die Steuereinrichtung 22 des Brennstoffzellenmoduls 3 mit der Fahrzeugsteuerung 33 und/oder mit der Traktionsbatterie 32 elektrisch gekoppelt sein. Im Beispiel der Figur 1 ist die Traktionsbatterie 32 außerhalb des Brennstoffzellenmoduls 3 im Intralogistikfahrzeug 1 untergebracht. Bei einer anderen, hier nicht gezeigten Ausführungsform, kann die Traktionsbatterie 32 im Brennstoffzellenmodul 3 untergebracht sein, also einen Bestandteil des Brennstoffzellenmoduls 3 bilden.

Die Modulventileinrichtung 8 und die Fahrzeugventileinrichtung 25 können gemäß den Figuren 2 bis 4 ein Wasserstofffilter 34, ein Schutzventil 35, ein manuelles Absperrventil 36 und ein elektromagnetisches Ventil 37 aufweisen. Außerdem können ein Drucksensor 38, ein Temperatursensor 39, eine thermische Druckentlastungseinrichtung 40 und eine Hochdruckentlüftungsleitung 41 vorgesehen sein. In den Beispielen der Figuren 2 und 3 sind außerdem ein weiterer Wasserstofffilter 42, ein Druckregelventil 43, ein Sicherheitsventil 44 und eine Mitteldruckentlüftungsleitung 45 vorgesehen. Die Modulbetankungseinrichtung 12 und die in Figur 2 vorhandene Fahrzeugbetankungseinrichtung 29 sind außerdem mit einem Sperrventil 46 und mit einem weiteren Wasserstofffilter 47 ausgestattet.

Im Modulgehäuse 5 sind außerdem ein weiteres Sperrventil 46, ein weiterer Drucksensor 47 und ein weiteres Sperrventil 48 vorgesehen. Außerdem sind die vorzugsweise als Nottrennkupplungen ausgestalteten steuerbaren Schnellsperrventile 49 innerhalb des Brennstoffzellenmoduls 3 sowie bei der in Figur 4 gezeigten Ausführungsform in der Fahrzeugventileinrichtung 25 vorgesehen. Weitere Sperrventile 48 finden sich bei den Ausführungsformen der Figuren 2 bis 4 in der Modulventileinrichtung 8 und bei den Ausführungsformen der Figuren 2 und 3 zusätzlich auch in der Fahrzeugventileinrichtung 25.

## Patentansprüche

1. Brennstoffzellenmodul (3) zum Versorgen eines elektrisch angetriebenen Intralogistikfahrzeugs (1) mit elektrischer Energie,
- mit einem Modulgehäuse (5),
- mit einem im Modulgehäuse (5) angeordneten Brennstoffzellensystem (6) zum Erzeugen elektrischer Energie mittels Wasserstoffgas,
- mit einem im Modulgehäuse (5) angeordneten Modultank (7) zum Lagern von Wasserstoffgas unter einem Hochdruck,
- mit einer im Modulgehäuse (5) angeordneten Modulventileinrichtung (8), die einen mit dem Modultank (7) gasführend gekoppelten Hochdruckanschluss (9), einen mit dem Hochdruckanschluss (9) gasführend gekoppelten Betankungsanschluss (10) und einen mit dem Brennstoffzellensystem (6) gasführend gekoppelten Mitteldruckanschluss (11) aufweist und die zum Bereitstellen des Wasserstoffgases am Mitteldruckanschluss (11) unter einem Mitteldruck konfiguriert ist,
- mit einer Modulbetankungseinrichtung (12) zum Befüllen des Modultanks (7) mit dem Wasserstoffgas, die einen am Modulgehäuse (5) angeordneten Einfüllstutzen (13) aufweist und mit dem Betankungsanschluss (10) der Modulventileinrichtung (8) gasführend gekoppelt ist,
- mit einem im und/oder am Modulgehäuse (5) angeordneten Zusatzanschluss (14), an den eine externe Wasserstoffgasquelle (15) zum Versorgen des Brennstoffzellenmoduls (3) mit Wasserstoffgas anschließbar ist.

2. Brennstoffzellenmodul (3) nach Anspruch 1,
**dadurch gekennzeichnet,**
- **dass** der Zusatzanschluss (14) als Zusatzhochdruckanschluss (16) ausgestaltet ist, an den die externe Wasserstoffgasquelle (15) zum Versorgen des Brennstoffzellenmoduls (3) mit unter Hochdruck stehendem Wasserstoffgas anschließbar ist und der mit dem Hochdruckanschluss (9) und mit dem Betankungsanschluss (10) der Modulventileinrichtung (8) gasführend gekoppelt ist.

3. Brennstoffzellenmodul (3) nach Anspruch 1,
**dadurch gekennzeichnet,**
- **dass** der Zusatzanschluss (14) als Zusatzmitteldruckanschluss (17) ausgestaltet ist, an den die externe Wasserstoffgasquelle (15) zum Versorgen des Brennstoffzellenmoduls (3) mit unter Mitteldruck stehendem Wasserstoffgas anschließbar ist und der unter Umgehung der Modulventileinrichtung (8) mit dem Brennstoffzellensystem (6) gasführend gekoppelt ist.

4. Brennstoffzellenmodul (3) nach Anspruch 3,
**dadurch gekennzeichnet,**
- **dass** das Brennstoffzellenmodul (3) ein Steuerventil (18) aufweist, das einen ersten Eingang (19), der mit dem Mitteldruckanschluss (11) der Modulventileinrichtung (8) gasführend gekoppelt ist, einen zweiten Eingang (20), der den Zusatzmitteldruckanschluss (17) bildet oder mit dem Zusatzmitteldruckanschluss (17) gasführend gekoppelt ist, und einen Ausgang (21) aufweist, der mit dem Brennstoffzellensystem (6) gasführend gekoppelt ist.

5. Brennstoffzellenmodul (3) nach Anspruch 4,
**dadurch gekennzeichnet,**
- **dass** das Steuerventil (18) so konfiguriert ist, dass es eine Parallelstellung ermöglicht, in der die beiden Eingänge (19, 20) parallel mit dem Ausgang (21) gasführend verbunden sind, und/oder
- **dass** das Steuerventil (18) so konfiguriert ist, dass der Ausgang (21) wahlweise nur mit dem ersten Eingang (19) oder nur mit dem zweiten Eingang (20) gasführend verbunden ist, und/oder
- **dass** der Zusatzanschluss (14) als manuell betätigbare Schnellkupplung konfiguriert ist.

6. Brennstoffzellenmodul (3) nach einem der vorhergehenden Ansprüche, **dadurch gekennzeichnet,**
- **dass** das Brennstoffzellenmodul (3) eine Steuereinrichtung (22) zum Betreiben des Brennstoffzellenmoduls (3) aufweist, die mit dem Brennstoffzellensystem (6) zum Steuern des Brennstoffzellensystems (7) und mit der Modulventileinrichtung (8) zum Steuern der Modulventileinrichtung (8) elektrisch gekoppelt ist.

7. Intralogistikfahrzeug (1),
- mit einem elektromotorischen Fahrzeugantrieb (2),
- mit einem Brennstoffzellenmodul (3) nach einem der vorhergehenden Ansprüche, das insbesondere anstelle eines Traktionsbatterieblocks in einem zur Aufnahme des Traktionsbatterieblocks konfigurierten Batterieaufnahmeraum (54) des Intralogistikfahrzeugs (1) angeordnet sein kann.

8. Intralogistikfahrzeug (1) nach Anspruch 7,
**dadurch gekennzeichnet,**
- **dass** das Intralogistikfahrzeug (1) einen Fahrzeugtank (24) zum Lagern von Wasserstoffgas unter dem Hochdruck aufweist,
- **dass** das Intralogistikfahrzeug (1) eine Fahrzeugventileinrichtung (25) aufweist, die einen mit dem Fahrzeugtank (24) gasführend gekoppelten Hochdruckanschluss (26), einen mit dem Hochdruckanschluss (26) gasführend gekoppelten Betankungsanschluss (28) und einen Mitteldruckanschluss (27) aufweist und die zum Bereitstellen des Wasserstoffgases am Mitteldruckanschluss (27) unter dem Mitteldruck konfiguriert ist,
- **dass** der Mitteldruckanschluss (27) der Fahrzeugventileinrichtung (25) mit dem Zusatzmitteldruckanschluss (17) des Brennstoffzellenmoduls (6) gasführend gekoppelt ist.

9. Intralogistikfahrzeug (1) nach Anspruch 8,
**dadurch gekennzeichnet,**
- **dass** der Fahrzeugtank (24) außerhalb des Modulgehäuses (5) am Intralogistikfahrzeug (1) angeordnet ist, und/oder
- **dass** der Fahrzeugtank (24) und der Modultank (7) baugleich ausgestaltet sind, und/oder
- **dass** die Fahrzeugventileinrichtung (25) und die Modulventileinrichtung (8) baugleich ausgestaltet sind.

10. Intralogistikfahrzeug (1) nach Anspruch 8 oder 9,
**dadurch gekennzeichnet,**
- **dass** die Modulbetankungseinrichtung (12) außerdem mit dem Betankungsanschluss (28) der Fahrzeugventileinrichtung (25) gasführend gekoppelt ist.

11. Intralogistikfahrzeug (1) nach einem der Ansprüche 8 bis 10,
**dadurch gekennzeichnet,**
- **dass** das Intralogistikfahrzeug (1) eine Fahrzeugbetankungseinrichtung (29) zum Befüllen des Fahrzeugtanks (24) mit dem Wasserstoffgas aufweist, die einen am Intralogistikfahrzeug (1) angeordneten Einfüllstutzen (30) aufweist und mit dem Betankungsanschluss (28) der Fahrzeugventileinrichtung (25) gasführend gekoppelt ist.

12. Intralogistikfahrzeug (1) nach Anspruch 11,
**dadurch gekennzeichnet,**
- **dass** der Einfüllstutzen (30) der Fahrzeugbetankungseinrichtung (29) außerhalb des Modulgehäuses (5) am Intralogistikfahrzeug (1) angeordnet ist, und/oder
- **dass** die Fahrzeugbetankungseinrichtung (29) und die Modulbetankungseinrichtung (12) baugleich ausgestaltet sind.

13. Intralogistikfahrzeug (1) nach einem der Ansprüche 8 bis 12,
**dadurch gekennzeichnet,**
- **dass** das Brennstoffzellenmodul (3) nach Anspruch 6 ausgestaltet ist,
- **dass** die Steuereinrichtung (22) außerdem mit der Fahrzeugventileinrichtung (25) zum Steuern der Fahrzeugventileinrichtung (25) elektrisch gekoppelt ist.

14. Intralogistikfahrzeug (1) nach einem der Ansprüche 7 bis 13,
**dadurch gekennzeichnet,**
- **dass** das Intralogistikfahrzeug (1) eine Traktionsbatterie (32) aufweist, die mit dem Brennstoffzellenmodul (3) und mit dem Fahrzeugantrieb (2) elektrisch gekoppelt ist.

15. Intralogistikfahrzeug (1) nach Anspruch 13 oder 14,
**dadurch gekennzeichnet,**
- **dass** das Intralogistikfahrzeug (1) eine Fahrzeugsteuerung (33) zum Betreiben des Intralogistikfahrzeugs (1) aufweist, die mit dem Fahrzeugantrieb (2) zum Steuern des Fahrzeugantriebs (2) elektrisch gekoppelt ist,
- **dass** die Steuereinrichtung (22) mit der Fahrzeugsteuerung (33) und/oder mit der Traktionsbatterie (32) elektrisch gekoppelt ist.
